(19) Europäisches Patentamt / European Patent Office / Office européen des brevets

(11) **EP 2 131 306 A1**

(12) **EUROPEAN PATENT APPLICATION**

(43) Date of publication:
**09.12.2009 Bulletin 2009/50**

(51) Int Cl.:
***G06K 9/00*** (2006.01)

(21) Application number: **08305265.4**

(22) Date of filing: **13.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **OISEL, Lionel**<br>  **92648, BOULOGNE CEDEX (FR)**<br>• **CHEVALLIER, Louis**<br>  **92648, BOULOGNE CEDEX (FR)**<br>• **SCHMOUKER, Philippe**<br>  **92648, BOULOGNE CEDEX (FR)** |
| (30) Priority: **02.06.2008 EP 08290508** | |
| (71) Applicant: **THOMSON Licensing**<br>**92100 Boulogne-Billancourt (FR)** | (74) Representative: **Huchet, Anne**<br>**46, Quai Alphonse Le Gallo**<br>**92100 Boulogne Billancourt (FR)** |

(54) **Device and method for tracking objects in a video, system and method for audience measurement**

(57)     The invention concerns a Device (3) and a method for tracking objects in a video. The device comprises
- means (12) for receiving at least one video input signal,
- Means (5) for detecting objects in said received video,
- Means (4) for identifying each detected object,
- Means (6) for tracking said detected objects in said video,
    According to the invention, the device comprises also controlling means (7) for
- keeping a list (9) of visible objects and a list (10) of recent objects, said list (10) of recent objects comprising objects previously in the visible objects list (9) which have disappeared from the current frames during a first predetermined period of time (T1) and
- comparing said identified objects with the objects of said list (9) of visible objects and said list (10) of recent objects and
- moving said objects from one list to the other one or deleting objects from the recent objects list (10) upon the result of said comparison.

Fig 3

EP 2 131 306 A1

**Description**

The invention concerns a method and a device for tracking objects in a video and a system and method for audience measurement.

The present invention concerns more precisely the tracking of objects for the application of audience measurement.

Recently, new advertisements displays have been set in plenty of commercial centers, of town centers, of exhibition halls.

Assessment of the effectiveness of advertising has long been performed by means of customer's interviews, surveys and sales figures analysis which are performed long after the people have been exposed to the commercials.

Real-time video analysis techniques now make it possible to provide real-time accurate measurements that can complete existing assessment techniques : they can provide an estimation of 2 figures generally involved in standard metrics of this domain: traffic - the total number of people passing by the screen - and viewer ship - the number of people having a look at the screen.

Therefore, in order to measure the efficiency of such advertisements, it is interesting to associate with these advertisements displays, capturing devices which capture the behavior of passers-by and can modify the live content according to the public. Thanks to video analysis that can be done based on the captured video, the system can also provide some statistics on the time passers-by spend in front of the display, on the number of persons looking at the display, or not looking at the display. This is one goal of the automatic audience estimation. Other information, such as demographic data on people looking at the screen (gender, age) and on their behavior can also be provided.

It is difficult to get all of these performances, because the visual environment is usually very noisy and therefore the counting of persons is a great challenge, compared to home environments for instance.

In most of the existing systems, it is difficult to measure precisely the number of passers-by without counting them several times because it is difficult to distinguish one person from the other one, especially in areas where there are a lot of people coming in and out.

The invention proposes an efficient device and method to analyze the passers-by. One purpose of such a method would be to establish automatically some statistics on the passers-by looking at a display, providing some efficient method to evaluate the impact of advertisement displays.

To this end, the invention proposes a device for tracking objects in a video comprising

- means for receiving at least one video input signal,
- Means for detecting objects in the received video,
- Means for identifying each detected object,
- Means for tracking the detected objects in the video,

According to the invention the device comprises also controlling means for

- keeping a list of visible objects and a list of recent objects, the list of recent objects comprising objects previously in the visible objects list which have disappeared from the current frames during a first predetermined period of time and
- comparing the identified objects with the objects of the list of visible objects and the list of recent objects and
- moving the objects from one list to the other one or deleting objects from the recent objects list upon the result of the comparison.

According to a preferred embodiment, the means for moving the objects move one object from the visible objects list to the recent objects list when the object is not visible in the video for the first predetermined time.

Preferentially, when the identified object is in the recent objects list, means for moving move the object to the visible objects list.

Preferentially, when one object is in the recent object list for more than a second predetermined time, the means for moving delete the object.

In a second embodiment, the means for receiving at least one video signal receive two video signals, and

the means for controlling comprise:

- means for matching the at least two videos obtained from the at least two video cameras,
- means for compiling parameters related to the size of the detected objects.

The invention concerns also a system for audience measurement According to the invention, it comprises

- A device for tracking objects in a video according to the invention,
- A display for displaying video,
- Means for capturing a video, which capturing area focuses on an area located in front of the display,
- Means for establishing statistics on the persons located in the capturing area.
  In a preferred embodiment, the means for statistics compiling are able to provide statistics on the number of persons detected in front of the display.
  The invention concerns also a method for tracking objects in a video comprising the steps of
- receiving at least one video input signal,
- detecting objects in the received video,
- identifying each detected object,
- tracking the detected objects in the video,

According to the invention, the method comprises also the following steps for

- keeping a list of visible objects and a list of recent objects, the list of recent objects comprising objects previously in the visible objects list which have disappeared from the current frames during a first predetermined period of time and
- comparing the identified objects with the objects of the list of visible objects and the list of recent objects and
- moving the objects from one list to the other one or deleting objects from the recent objects list upon the result of the comparison.

The invention concerns also a method for tracking objects in a video comprising means to detect them in a video and means to track them According to the invention, the method comprises a step to count them only once when they have disappeared from the video for a time less than a predetermined period.

The invention concerns also a method for audience measurement. According to the invention, the method comprises

- A method for tracking objects in a video according to claim 8,
- A step of displaying video by display means,
- A step for capturing a video, of an area located in front of the display,
- A step for establishing statistics on the persons located in the capturing area.
  Other characteristics and advantages of the invention will appear through the description of a non-limiting embodiment of the invention, which will be illustrated, with the help of the enclosed drawing.
- Figure 1 represents a global overview of a system implementing the invention,
- Figure 2 represents the area covered by the camera,
- Figure 3 represents the object recognition algorithm,
- Figure 4 represents the tracking of the objects,
- Figure 5 represents the list management,
- Figure 6 represents an embodiment of device 3,
- Figure 7 represents an embodiment of the invention with two cameras.
- Figure 8 represents the calibration step in the embodiment with two cameras.

The represented modules are functional units, which can correspond or not to units physically different. For instance, some modules or part of them can be grouped in a single component, or can constitute the functionalities of a same software. Some modules can also comprise physically distinguishable entities.

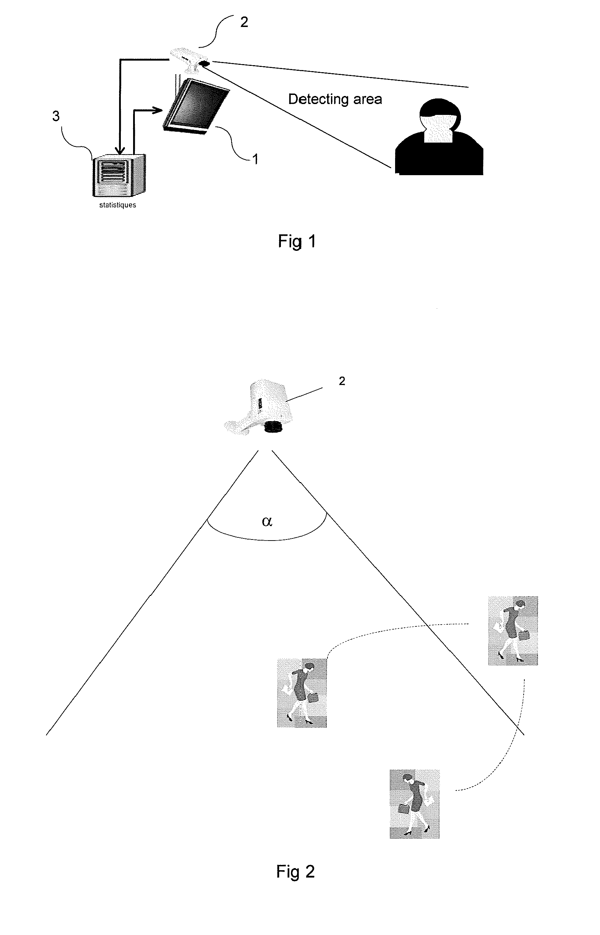

Figure 1 represents an overview of a simplified system implementing a preferred embodiment of the invention.

A display 1 is located in an area where it can be seen by several passers-by. For instance in a shopping hall, in a supermarket, in a train station and so on and so forth. One purpose of the display is to display some advertisements for instance. Other purposes can be seen for instance, for displaying some safety regulations, some traffic jam information...

Preferably the display is hanged up on a wall high enough to be at the eyes level of adults or children according to the type of public it is intended for.

A camera 2 is located close to the display so that its detection area covers an area in front of the display. It is arranged to view a scene in front of the advertising display. So that when people are passing-by, their bodies and heads can be detected preferably.

Preferably the camera is placed above the display.

One purpose of the camera is to film the scene in front of the display in order to make statistics on the behavior of passers-by.

To this end, a device 3 is connected to the camera.

Such a device can be a personal computer which first analyses the video output from the camera and secondly provides statistics to remote clients for exploitation.

The device 3 uses computer-vision techniques to count the number of faces in an image that are viewing the advertisement display 1.

The device 3 can be located close to the camera but can also be connected to the camera via a network. For instance it can be a universal serial bus connection, an internet network or other domestic network.

Among several advantageous characteristics, it is proposed an efficient method to detect the number of passers-by in front of the camera, avoiding to count twice or more the same person who quits the detection area and comes back a short time after or who may be occluded by an object or another person and detected again. For the sake of precision, the series of presence/absence should not be counted as many times since it corresponds actually to the same person. Accordingly, these successive appearances of the same person should be merged together.

The display is switched on most of the time, according to the areas where it is located. If it is placed in a train station, it can be switched on all night and day long. If it is located in a commercial center, it can be switched on when the shops are opened.

When the display 1 is on, the camera 2 is also on and the device 3 is also switched on.

The method relies mainly on the four components:

- Face detection for detecting people looking at the screen,
- Feature extraction for qualifying people,
- real-time object tracking,
- passers-by detection and counting.

Figure 2 represents the camera capture area. On this figure, the angle α represents the viewing angle of the camera. A face can go in and out of the camera captured area and therefore can be counted twice in a prior art system. According to the invention, this problem is solved.

The people detected by the system are to be located in front of the camera within given distance and angle. The angle depends on the camera lens, the maximum distance depends on the resolution of the sensor:

$$D = \frac{\mathrm{Re}\,s \times Fw}{2 \times \sin(\alpha/2) \times Pw}$$

If Res is the horizontal resolution (eg 640)
Fw is the average width of human faces (ie 0.17 m)
$\alpha$ is the width of the horizontal view angle (eg 55°)
and Pw the minimal size of faces in images for the face detector (eg 24 pixels).

If the angle is increased the horizontal resolution must be increased accordingly for keeping the same maximum distance. Finally, the people detection rate depends on the sensor resolution (image size) and on the CPU power.

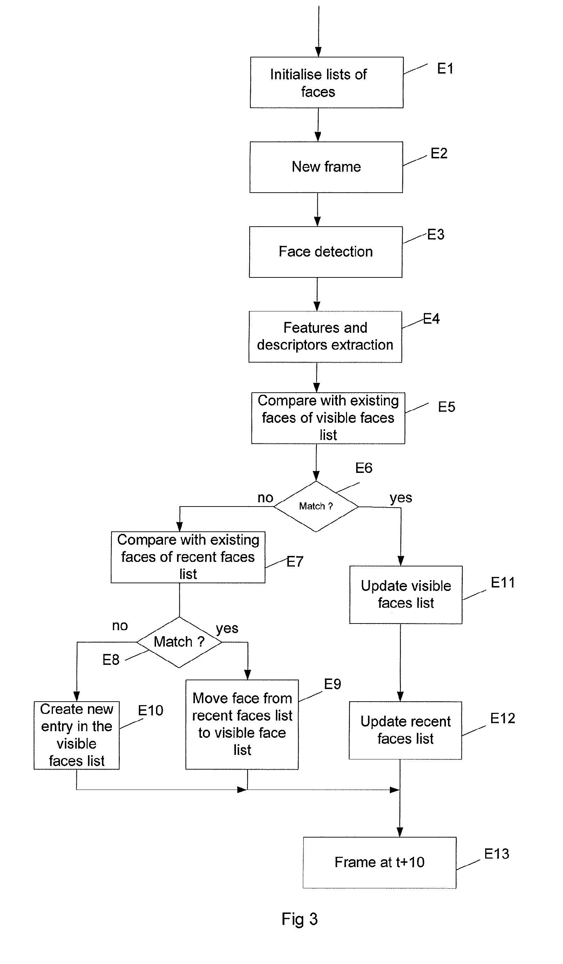

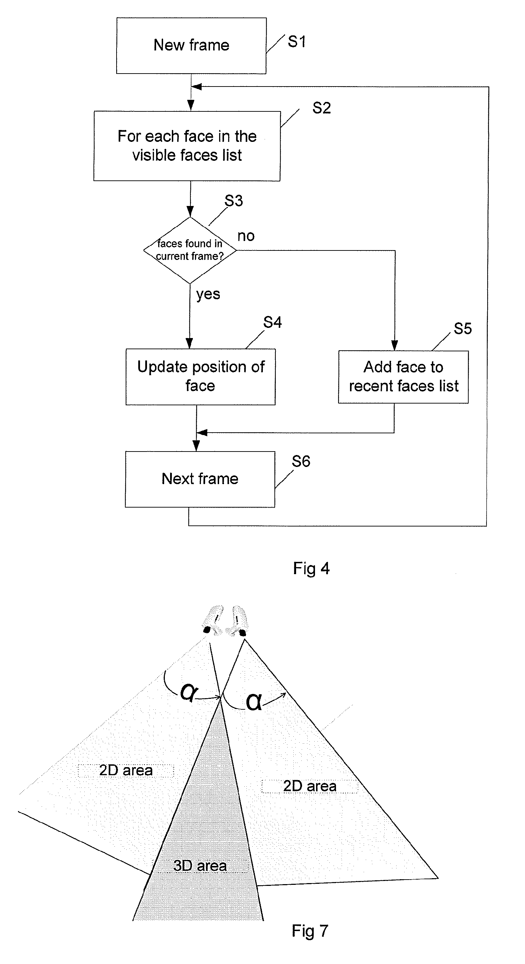

Figure 3 represents a flow chart of the algorithm executed by a video processing module comprised in the device 3. Such a video processing module executes mainly two main processing described respectively in regards to figures 3 and 4

- face detection for detecting people looking at the screen,
- real-time face tracking.

The face detection module detects new visible faces and the tracker tracks these detected faces in real time.
Among others, an estimation of the attention level is estimated by the system based on an analysis of the trajectory of the faces and on an estimation of the pose of the face.

When the device 3 is switched on, or an application related to statistics measurement is launched, the video processing module initializes lists of objects in a step E1. Two different lists are initialized, first they are empty.

A first list is called visible faces list. This list comprises the faces located in the detection area of the camera 2 detected in the current frame.

A second list is called recent faces list. This list comprises the faces that were previously (only since a predetermined time) in the visible faces list but which have disappeared from the detection area of the camera device 2.

In a step E2, the camera starts to capture the images. A first frame is captured and received by device 3. A face detection method is carried on, offline to detect the faces in this image. The detection of faces is done offline because the computing capacities are not big enough for doing it live. However, according to the performances of the device 3, this could be done on the fly.

Many face detection algorithms exist today. The purpose of the invention is not to claim a face detection method. The face detection mechanism used in the invention can be any reliable face detection algorithm. The invention however enables a face detection but also a discrimination of these faces to be able to distinguish them.

In a step E4, some low level features are extracted and descriptors are computed. In order to extract these low level features, the body of the person is also used and mainly a color histogram is calculated on the body of the person. Using the body enables to distinguish faces and therefore improves the tracking process because faces are difficult to characterize.

The body is located thanks to the location of the corresponding face. For improving the reliability, each face is associated with a list of color histograms that were acquired over the presence period of the face. In order to avoid potential problems of occlusion (one person hiding partially another one), a clustering is applied to the list of color histograms associated with each person. With such a method, a cluster emerges and that cluster corresponds to the actual body of the person since many color histograms are regularly acquired for every person.

The reliability can also be improved by using other features than the color and for instance, the texture. The movement also can be used: from one frame to the other, one face cannot move a lot.

The extraction of color features is a well known process and will not be described in detail here.

A color histogram is associated with each detected face. This is kept in a memory in the device 3 and in step E5, this is compared with the color histograms of existing faces already detected in previous frames and stored in the visible faces list. For the comparison, the stored color histograms are compared to the one of the current detected face.

In a step E6, if the face is unknown in the visible faces list, which means that the comparison did not match, step E7 is executed. The face is compared with the faces present in the recent faces list.

In a step E8, if there is a match, step E9 is executed and the face is moved from the recent faces list to the visible faces list.

In the step E8, if there is no match, step E10 is executed and a new entry is added in the visible faces list for this face.

In a step E11, after step E6, the visible faces list is also updated. This update is described later in reference to figure 4 and can consist in updating the position of the face for instance, or the size of the face.

In a step E12, the recent faces list is also updated. When faces are present in the recent faces list for more than 5 seconds, without being detected again and therefore moved to the visible faces list, they are erased form the recent faces list. In other embodiments, more or less than 5 seconds can be used.

In a step E13, when 9 frames are elapsed since the beginning of this flow-chart, step E2 is executed again, this process taking more time than a single frame time to be executed. Indeed, the process, from step E1 to step E12 is time consuming and according to the performances of the device 3, it is not possible to do it for each frame. In other embodiments, one can shorten this period of step E13 or increase it according to the performance of the device.

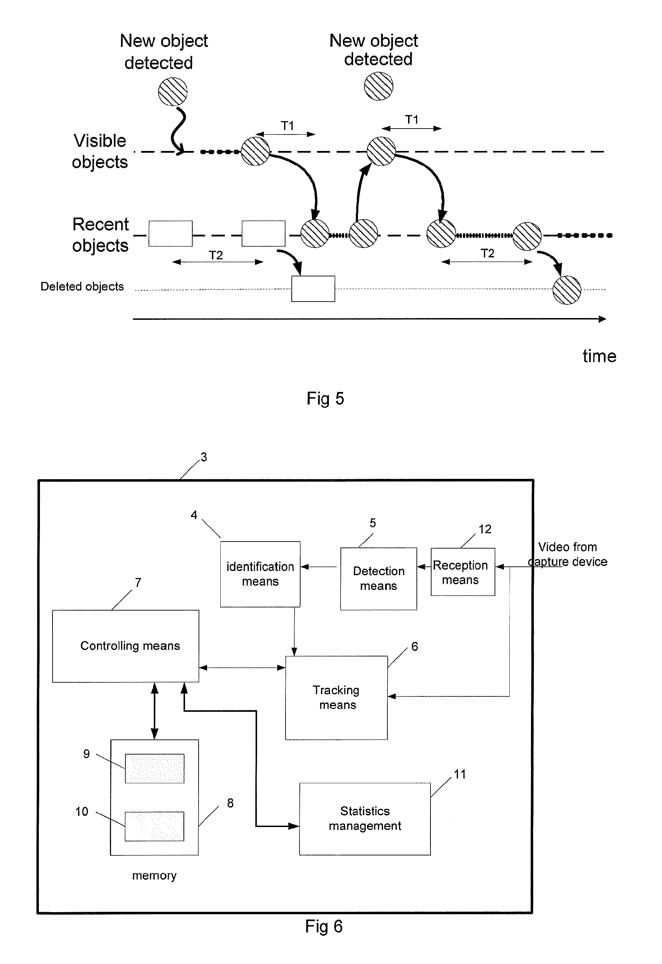

Figure 5 gives a graphic overview of the exchanges done between the two lists. The faces present in the visible faces list are kept in this list unless they do not appear anymore during a time T1. After this time period T1, the face is moved to the recent faces list. When it appears again in the current frame, it is moved form the recent faces list to the visible faces list and stays again unless it is not seen during a time T1. If this is the case, it is moved to the recent faces list. If it does not appear anymore in the current frames, for a time T2, it is deleted completely. As described previously T1 can be set to 1 s and modified according to the reliability of the matching process. T2 is set to 5s.

The method for tracking objects therefore comprises a step to count them only once when they have disappeared from the video for a time less than a predetermined period T2.

On figure 4, the tracking process is described. In addition to the face detection and identification process described in reference to figure 3, a real-time face tracking process is also performed by the device 3. The tracking process enables to follow a face all along the video by searching it from one frame to the next one. It enables to associate with each face of the video, one position of this face in the video.

This tracking algorithm is performed on each frame. In a step S1, a new frame is captured by the camera and received by the device 3.

Each face of the visible list is tracked in this new frame. This tracking process can be done for each frame, as it is neither time consuming nor performance consuming for the device 3.

Therefore, each face of the visible list is tracked, in a step S2. In a step S3, if this face is found, step S4 is performed. Otherwise, step S5 is performed.

In step S4, the position of the face, on the video frame is updated. This position is also kept and stored in the device 3 for each detected face. When the size of the face can be detected, the size of the face can also be updated.

In the step S5, the face is moved to the recent faces list if it does not appear during a time period T1. This can correspond to several frames.

Moving a face from one list to the other list is not immediate but a temporization T1 is done. Indeed, sometimes, a matching cannot be performed because the face is in a position where it is partially occluded by another face for instance and therefore, the color histogram cannot be computed correctly or at least does not reflect the reality. Moreover, the matching is also based on a threshold and therefore the matching decision depends on the value of this threshold. So, even if the face is not detected, it can be present in the worst situation. This is also taken into account before deciding that a face should be moved to the recent faces list. The time set for moving one face from the visible faces list to the recent faces list is 1s when the confidence of the matching is low.

Therefore, the method avoids counting twice or more the same person who has just moved out of the camera captured area, or who comes back after a while to look at the display once more.

The method for tracking objects therefore comprises a step to count them only once when they have disappeared from the video for a time less than a predetermined period T2.

After steps S4 and steps S5, step S6 is performed and the next frame is analyzed.

Figure 6 represents an embodiment of device 3.

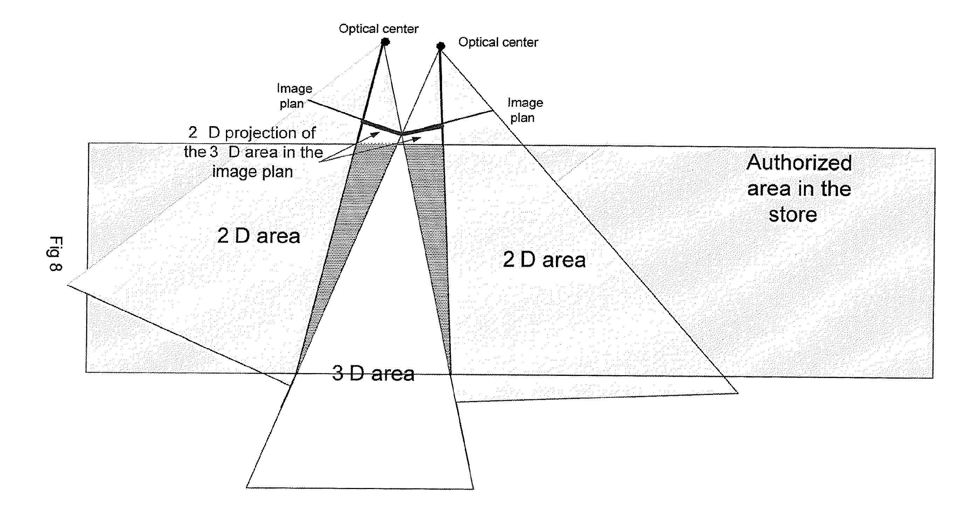

Device 3 comprises reception means 12 for receiving at least one video signal. As mentioned later in reference to figures 7 and 8, two video signals can be received coming from two video cameras. In other embodiments of the invention not described here, more than two video cameras can be connected. The device 3 comprises also detection means 5 connected to the reception means 12. The detection means are in charge of detecting faces in the received video captured by the camera 2. As mentioned earlier, several methods are well known for face location in a video. The detection means 5 are connected to identification means 4, in charge of distinguishing the faces in the video. The detection means are in charge of the face detection step E3 of figure 2.

Once the faces are detected, they have to be identified. This means that a label is assigned to each face to be able to distinguish these faces. These faces can be distinguished by a color histogram as mentioned earlier. The color histogram is related to the body of the person, by establishing a color histogram of the clothes for instance. The identification means are in charge of the features and descriptors extraction step E4 of figure 2.

Once the faces are identified, they can be labellized and therefore a list can be established. Controlling means 7 are in charge of updating these lists. As mentioned earlier, two lists exist: a visible faces list 9 and a recent faces list 10.

These lists are kept in a memory 8 in the device 3. Memory 8 can be a memory of SDRAM type for instance.

Tracking means 6 are also connected to the controlling means 7, to the identification means 4, to the video input signals. The tracking means 6 inform the controlling means 7 of the new position of the tracked faces in the video and the controlling means 7 update this information in the visible objects list 9. When the objects of the visible faces list 9 are no more detected for a time T1, they are moved to the recent faces list 10, as described in reference to figure 6.

Means 11, for compiling statistics, are also linked to the controlling means 7. These means are in charge of providing some statistics on the behaviour of the passers-by in front of the display. These statistics comprise for instance the following information:

- number of persons looking at the display,
- time spent for viewing the display by each detected person,
- category of each person, e.g. adult or child,
- numbers of passers-by who do not look at the display. This can be done by additional features, which consist in measuring the attention of each person. By using the symmetry of the body, some measures can be carried out, in order to measure the attention.

The means 7 for controlling provide these data to the statistics means 11 under the form of metadata. Such metadata are associated with time codes giving information on the time at which the persons were watching at the display, how long they have been watching at the display. This parameter can be compiled by counting the number of frames a face is detected, or how long it stays in the visible faces list. These metadata can be sent regularly or can be sent at the end of each video clip displayed by the display. Therefore, they can be associated with each video clip, so that the statistics are then compiled for each video clip.

Upon the compilation of the statistics, the content displayed on the display 1 can be adapted. For instance, some videos can be skipped and another one can be displayed, some video can be shortened, video on some specific items can be displayed according to the type of persons detected.

Figure 7 represents an embodiment of the invention where two cameras are associated with the display.

The two cameras are located close to each other and close to the advertising display, the purpose of the two cameras being as in the previous described embodiment, to capture the activity in front of the display. The two cameras have a viewing angle $\alpha$ which is the same for the two cameras but can also be different for the two cameras. Thanks to the two cameras, it is possible to obtain a 3-D view of the area in front of the advertising display. When there is only one camera, the system has to balance with

- The maximum viewing angle,
- The maximum distance of detected people.

To obtain a $2\alpha$ viewing angle, without having non covered area, the optical centers of the two cameras should be located at the same position. In real situations, the two cameras captured areas overlap so that the maximum viewing angle is lower than $2\alpha$. The invention takes advantage of this overlap area to generate 3 dimensions information to improve the localization of faces and therefore improve the reliability of the attributes associated with each detected face. Among the attributes that can be associated with the faces, the height of the person can be calculated, thanks to the three-dimensions.

As the face can be visible in two images (one coming from each camera), a matching process is performed.

In order to start the matching process, one criterium has to be checked.

It relies on a pre-calibration step which consists in estimating the 3D projection area in the two images.

First the 3D area and its projection is assumed to be fixed for a given location in a store (assuming intrinsic and extrinsic camera parameters are fixed, meaning the camera rig is fixed and rigid and the zoom cannot be modified.

Theoretically, this calibration step is interesting only if the image plans of both cameras are not parallel. Considering two parallel image plans and the possibility for a person to lie in the infinity, the projection of the 3D area just consists in the whole image plans. In real situation, image plans are not parallel and due to the situation of the camera rig in a store, distance between cameras and people to be considered is limited.

Figure 8 shows an example of the calibration.

The calibration step consists in presenting a face located at the maximum distance of the stereo rig and moving it along the maximum distance line.

When the face disappears in one image then the location in the image where the face is still visible gives the limit in this image of the 3D area projection.

The region of the images corresponding to the projection of the 3D area on the image plans is denoted matching regions. The presence of a face in the matching region does not imply that the corresponding 3D face lies in the 3D area, as can be seen on figure 7 in the dotted region. The matching process is launched only if one or more faces are visible in each matching region. To ensure that faces from the two matching regions correspond to the same 3D face (i.e. 3D face is visible in the two images), the matching process described earlier can be used.

The characterization of the geometry associated with the two cameras is of key importance in order to build a 3D model of the scene. Assuming a pinhole camera model, the projection model of a 3D point P(X; Y;Z) on a point p(x; y) of the image plane, is determined by a system of two equations linking a 3D point P(X; Y;Z) to its projections p1 (x; y) in the first image and p2(x'; y') in the second one. Without lost of generality, it is assumed that the world coordinate system coincides with the first camera coordinate system. The resulting system can be written using homogeneous coordinates as follows (where ~ denotes homogeneous coordinates):

$$\begin{cases} \tilde{p}1 = A1[Id \ 0]\tilde{P} \\ \tilde{p}2 = A2[R \ t]\tilde{P} \end{cases} \quad (1)$$

R is the rotation matrix and t is translation vector defining the second camera location extrinsic parameters. More precisely, R and t are the orientation and position of the first camera expressed in the second camera coordinate system. Matrix A contains internal camera parameters (intrinsic parameters containing pixel sizes, pixel angle, focal length, coordinates of the optical center of the camera).

The issue addressed is the recovery of 3D information from sets of 2D images. It consists in solving equation (1) to obtain the 3D point P. To that end, corresponding points p1 and p2 and calibration parameters (extrinsic and intrinsic parameters) giving A1, A2, R, t have to be recovered.

To do so, an accurate matching is performed. This matching process can take benefits of the output of the face detector that provides the location in both images of the eyes. Eyes in both images are easily matched so that a traditional 3D reconstruction can be easily performed (assuming that the intrinsic and extrinsic are known).

Assuming a fixed stereo rig, the intrinsic and extrinsic parameters of the system can be estimated in an initial offline process.

Both camera rig parameters and pixels correspondences are known. The coordinates of the 3D point can be easily computed by solving system 1.

The output of this step consists in an estimation of the 3D position of the eyes that can be extrapolated to give the size of the person facing the camera by computing the 3D distance between the ground and the eyes.

In this case a traditional matching process based on correlation can provide 3D information. Once the 3D reconstruction is done, the 3D information is linked to the session corresponding to the 3D face considered (represented by the 2 projections in the 2 images).

The 3D reconstruction has already been done for this face and the 3D information is already linked to the face session. No new 3D reconstruction will be performed for this face. Two 2D tracking are conducted individually in the two images (an alternative could consist in using the fact that the two projections correspond to the same 3D face and that the displacement in both images has to be consistent).

The 2D tracking is performed in the image where the face remains visible. The state of the system is the initial state. If the face goes back to the matching area, the matching will be done but no 3D reconstruction will be performed.

After a delay to be fixed by the system user, the session is finally closed. The disappearance time is set to the last time the face was visible.

The device 3 can therefore establish some statistics on the behaviour of the passers-by in front of the display.

In the embodiment described in reference to figures 7 and 8, the device 3 can also be used as such; the detection means, the identification means and the tracking means having to detect faces and identify them in both images obtained from the two cameras.

Thanks to the above described embodiments, several statistics can be compiled. Among these, the presented method enables an efficient method to count the passers-by without counting them several times. The obtained results are thus reliable and can help advertisers to know the effect of their advertisements.

Thanks to the second embodiment of the invention, it is also possible to get more information on the persons and namely their size. This can also help in categorizing the persons viewing the display.

According to the passers-by attitude, it can also be possible to modify the content which is displayed on the display.

The results obtained by the device 3 can be compiled as metadata. These metadata include how many and when people look at the display. They also inform on possible categories, male/female, kids/adults. They also inform on the number of persons passing in front of the screen, not necessarily looking at the screen.

The metadata are dedicated to statistics collection and exploitation by advertisers in order to optimize the schedule of advertisements, clips and to analyze the behavior of their customers.

This information may be correlated to the scheduling of the advertisement video showed on the screen.

The statistics are associated with time codes. This information can then be used to assess the video interest.

All along the description, the detection and tracking of faces has been discussed. However, the current method and devices can be applied in a more general manner to the detection and tracking of objects which are different from faces. For instance, the system can make statistics on the number of dogs in a street, on the number of cars and so on and so forth. Therefore, the invention is not limited to the detection of faces. For this, the detection means have to be adjusted to the type of object to be detected.

**Claims**

1. Device (3) for tracking objects in a video comprising

    - means (12) for receiving at least one video input signal,
    - Means (5) for detecting objects in said received video,
- Means (4) for identifying each detected object,
- Means (6) for tracking said detected objects in the video,

**Characterized in that** said device comprises also controlling means (7) for

- keeping a list (9) of visible objects and a list (10) of recent objects, said list (10) of recent objects comprising objects previously in said visible objects list (9) which have disappeared from the current frames during a first predetermined period of time (T1) and
- comparing said identified objects with the objects of said list (9) of visible objects and of said list (10) of recent objects and
- moving said objects from one list to the other one or deleting objects from said recent objects list (10) upon the result of the comparison.

2. Device according to claim 1 **characterized in that** said means for moving said objects move one object from said visible objects list to said recent objects list when said object is not visible in said video for said first predetermined time (T1).

3. Device according to claim 1 or 2 **characterized in that** when said identified object is in the recent objects list, means for moving move said object to the visible objects list.

4. Device according to one of the preceding claims **characterized in that** when one object is in said recent object list for more than a second predetermined time (T2), said means for moving delete said object.

5. Device according to any of the previous claims **characterized in that** the means for receiving at least one video signal receive two video signals, and the means (7) for controlling comprise:

- means for matching said at least two videos obtained from said at least two video cameras,
- means for compiling parameters related to the size of the detected objects.

6. System for audience measurement **characterized in that** it comprises

- A device (3) according to any of the preceding claims,
- A display (1) for displaying video,
- Means (2) for capturing a video, which capturing area focuses on an area located in front of said display (1),
- Means (11) for establishing statistics on the persons located in said capturing area.

7. System for audience measurement according to claim 6 **characterized in that** the means for statistics compiling are able to provide statistics on the number of persons detected in front of said display (1).

8. Method for tracking objects in a video comprising the steps of

- receiving at least one video input signal (E2),
- detecting objects in said received video (E3),
- identifying each detected object (E4),
- tracking (S2, S3) said detected objects in said video,

**Characterized in that** said method comprises also the following steps for

- keeping a list of visible objects and a list of recent objects,
said list (10) of recent objects comprising objects previously in the visible objects list (9) which have disappeared from the current frames during a first predetermined period of time (T1) and
- comparing (E5, E7) said identified objects with the objects of said list (9) of visible objects and said list (10) of recent objects and
- moving (E9, S5) said objects from one list to the other one or deleting (E12) objects from the recent objects list (10) upon the result of said comparison.

9. Method for tracking objects in a video comprising means to detect them in a video and means to track them **characterized in that** it comprises a step to count them only once when they have disappeared from said video for a time less than a predetermined period (T2).

10. Method for audience measurement **characterized in that** it comprises

- A method for tracking objects in a video according to claim 8,
- A step of displaying video by display means (1),
- A step (2) for capturing a video, of an area located in front of said display (1),
- A step (11) for establishing statistics on the persons located in said capturing area.

Detecting area

Fig 1

α

Fig 2

```
          ┌─────────────────┐
          │ Initialise lists of │ ─── E1
          │     faces        │
          └─────────────────┘
                   │
                   ▼
          ┌─────────────────┐
          │   New frame     │ ─── E2
          └─────────────────┘
                   │
                   ▼
          ┌─────────────────┐
          │  Face detection │ ─── E3
          └─────────────────┘
                   │
                   ▼
          ┌─────────────────┐
          │  Features and   │ ─── E4
          │ descriptors extraction │
          └─────────────────┘
                   │
                   ▼
          ┌─────────────────┐
          │ Compare with existing │ ─── E5
          │ faces of visible faces │
          │       list      │
          └─────────────────┘
                   │
                   ▼         E6
       no      ╱◇╲      yes
      ┌────────  Match ?  ────────┐
      │          ╲◇╱              │
      ▼                           ▼
┌─────────────────┐       ┌─────────────────┐
│ Compare with existing │  │  Update visible │ ─── E11
│ faces of recent faces │  │   faces list    │
│       list      │ E7    └─────────────────┘
└─────────────────┘               │
      │                           ▼
  no ╱◇╲ yes              ┌─────────────────┐
  ┌── Match ? ──┐         │  Update recent  │ ─── E12
  │   ╲◇╱       │         │   faces list    │
  │ E8          │         └─────────────────┘
  ▼             ▼                 │
┌──────┐  ┌──────────────┐        │
│Create new│ │ Move face from │ E9│
│entry in the│ │ recent faces list │ │
│ visible  │ E10 │ to visible face │ │
│faces list│  │     list     │    │
└──────┘  └──────────────┘        │
   │            │                 ▼
   └────────────┴─────────┐ ┌─────────────────┐
                          │ │   Frame at t+10 │ ─── E13
                          └─│                 │
                            └─────────────────┘
```

Fig 3

EP 2 131 306 A1

Fig 4

Fig 7

New object
detected

New object
detected

Visible
objects

T1

T1

Recent
objects

T2

T2

Deleted objects

time

Fig 5

3

identification
means

4

Detection
means

5

Reception
means

12

Video from
capture device

7

Controlling means

Tracking
means

6

9

10

8

Statistics
management

11

memory

Fig 6

Fig 8

Europäisches
Patentamt

European
Patent Office

Office européen
des brevets

## EUROPEAN SEARCH REPORT

**Application Number**

EP 08 30 5265

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/082429 A (BRITISH TELECOMM [GB]; LEI BANJUN [NL]; XU LI-QUN [GB]) 10 August 2006 (2006-08-10) | 1-4,8,9 | INV. G06K9/00 |
| Y | * abstract * * figures 2,3 * * figure 16 * * paragraphs [0138] - [0142] * | 5-7,10 | |
| Y | US 2004/017929 A1 (BRAMBLET JOHN W [US] ET AL) 29 January 2004 (2004-01-29) | 5 | |
| A | * abstract * * paragraphs [0058] - [0060] * * paragraph [0126] * * figure 1 * | 1-4,6-10 | |
| Y | JP 2007 018218 A (NTT FACILITIES INC; BRAINS CORP; N T T KENCHIKU SOGO KENKYUSHO) 25 January 2007 (2007-01-25) | 6,7,10 | |
| A | * abstract * * figure 1 * | 1-5,8,9 | TECHNICAL FIELDS SEARCHED (IPC) |
| A | US 6 967 674 B1 (LAUSCH HOLGER [DE]) 22 November 2005 (2005-11-22) * figure 2 * * paragraphs [0019], [0020] * | 1-10 | G06K G06Q G06M |
| A | EP 1 566 788 A (SONY UK LTD [GB]) 24 August 2005 (2005-08-24) * abstract * * paragraph [0007] * | 1-10 | |
| A | ACM, 2 PENN PLAZA, SUITE 701 - NEW YORK USA, 2 November 2006 (2006-11-02), XP040051415 * the whole document * | 1-10 | |

The present search report has been drawn up for all claims

| Place of search | Date of completion of the search | Examiner |
|---|---|---|
| The Hague | 25 August 2009 | Naci, Suphi Umut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                    
& : member of the same patent family, corresponding document

EPO FORM 1503 03.82 (P04C01)

**EP 2 131 306 A1**

## ANNEX TO THE EUROPEAN SEARCH REPORT
## ON EUROPEAN PATENT APPLICATION NO.

EP 08 30 5265

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2009

| Patent document cited in search report | | Publication date | Patent family member(s) | | Publication date |
|---|---|---|---|---|---|
| WO 2006082429 | A | 10-08-2006 | EP | 1844443 A1 | 17-10-2007 |
| US 2004017929 | A1 | 29-01-2004 | US | 2008285802 A1 | 20-11-2008 |
| JP 2007018218 | A | 25-01-2007 | NONE | | |
| US 6967674 | B1 | 22-11-2005 | AT | 264524 T | 15-04-2004 |
| | | | AU | 7284700 A | 10-04-2001 |
| | | | CA | 2390456 A1 | 15-03-2001 |
| | | | DE | 19962201 A1 | 15-03-2001 |
| | | | DE | 20015559 U1 | 11-01-2001 |
| | | | WO | 0118697 A1 | 15-03-2001 |
| | | | EP | 1210680 A1 | 05-06-2002 |
| | | | ES | 2219390 T3 | 01-12-2004 |
| EP 1566788 | A | 24-08-2005 | JP | 2005251170 A | 15-09-2005 |
| | | | US | 2005197923 A1 | 08-09-2005 |

EPO FORM P0459

For more details about this annex : see Official Journal of the European Patent Office, No. 12/82